# EUROPEAN PATENT APPLICATION

(11) **EP 4 571 668 A1**
(43) Date of publication of application: **18.06.2025**
(21) Application number: 24216056.2
(22) Date of filing: 28.11.2024
(51) Int. Cl.: G06V 10/24, G06V 20/64

(54) **INSPECTION SYSTEM**

(30) Priority: 13.12.2023 GB 202319017
(71) Applicant: Rolls-Royce plc, London N1 9FX (GB)
(72) Inventor: Hackett, Jeremy G, Derby, DE24 8BJ (GB); Moore, Benjamin J, Derby, DE24 8BJ (GB)
(74) Representative: Rolls-Royce plc

(57) **Abstract**

A method for determining the wear to a component, the method comprising: taking an image of the component using a camera, transferring the image of the component into the memory of a computer and adding metadata related to the component, comparing the captured image of the component against a perfect component, and determining the amount of material loss between the perfect component and the imaged component by determining the differences between the captured image data with that of a perfect component.

## Description

### FIELD

The disclosure relates to a method of assessing the health of a component against a reference to determine properties and suitability for use. The disclosure further relates to a computer program for assessing the suitability of a component for use.

### BACKGROUND

It is well known that in motors or engines, combustion engines in particular, that at certain intervals components and parts are set to be removed and replaced during servicing. The idea is that after a certain amount of time, the removed component has gone through enough cycles and is no longer suitable for use in its desired operation. In the process of removal, the component is scrapped, and no information gathered regarding the component, the lifetime and/or the wear on that component. Therefore, information on the nature of the processes that the component undergoes is lost. There is also no assessment of whether the component was still usable. Furthermore, without inspection some components are scrapped that could be repaired and this increases the cost. Consequently, it is desired that there is a system in place that can garner further information and determine the status of the component.

### SUMMARY

According to a first aspect of the disclosure there is presented a method for determining the wear to a component, the method comprising: aligning the component with a physical or digital mask, wherein the physical or digital mask is transparent, with areas marked for an edge of the component; taking an image of the component using a camera; transferring the image of the component into the memory of a computer and adding metadata related to the component; comparing the captured image of the component against a perfect component (i.e., a datum); and determining the amount of material loss between the perfect component and the imaged component by determining the differences between the captured image data with that of a perfect component.

The imaged component may be scaled to a co-ordinate database that matches a model of the perfect component, and the determining of the material loss is performed by subtracting the co-ordinates of the imaged component from those of the perfect modelled component.

The amount of material loss may be compared against the material limits of the component and the component is sentenced based on this comparison.

The component may be scaled using either a scale marked on the mask, or by determining the size from a feature of known size on the component.

The image may be mapped onto a three-dimensional model of the component, before the comparison of size is performed.

The metadata may be added to the image is one or more of the following: engine, component number, engine run time, operator, area of operation.

The material loss may be divided by the engine run time to determine the material loss per unit time of the engine running.

The material loss over unit time may be output to a manufacturer or operator to identify replacement time limit for the component.

In cases in which the component is a component of turbine of a gas turbine engine, wear to the component may be categorised into at least one of loss of a portion of thermal barrier coating; loss of a portion of substrate material (such as a nimonic alloy); alteration of a flow area of at least one cooling hole through the substrate and thermal barrier coating, or holing of the component;

In these cases, a safe length of future running time on the component may be predicted based upon the determined categorisation of wear of the component and the metadata.

In these cases, the component may be sentenced to be either scrapped, refurbished or refitted to a gas turbine engine based upon the predicted safe length of future running time.

According to a second aspect of the disclosure there is provided a computer operated program for determining the material loss of a component, by performing the method steps according to the first aspect.

The computer program may be installed on the device having the camera used for imaging.

The captured image data may be transferred to a second computer, having the program of the second aspect.

According to a third aspect of the disclosure there is provided a computer implemented method of sentencing a component for an engine or motor; the method comprises uploading images of a component into a computer program, the program determines the position of edges or features on the component or the image file and fits the image data against the data for a new ideal component and calculates the value for an amount of material loss of the component, the value for the amount of material loss is compared against determined engineering limits to sentence the component.

The images of the component may be taken from the same position as that of the new ideal component and material loss is calculated by pixel counting.

Features, edges or corners of the component, or features on the image may be used to determine scale, the scale is then used to calculate an aera of the component, this calculated area is compared with the area of the new ideal component to calculate the value for the amount of material loss.

The photographed images may be mapped onto a three-dimensional model of the component before the area of the component is calculated.

The area may be for the entire component or a specific region of the component.

The component is imaged along with a physical or digital mask having at a feature on the mask to assist in the recognition of edges, corners or scale.

The system may comprise a convolutional neural network.

The system may also be used to determine the presence of a fault on the component, by comparing the image against a dataset of component images having known faults and determining the similarity likelihood between the image of the component and the image in the system of the known fault.

The dataset data may be labelled with the fault and an associated risk that the fault presents to the component.

The presence of the fault may also be used in sentencing the component.

The results for the value for the amount of material loss may be stored along with the metadata in a database for the calculation of the value for the amount of material loss for the same component form different engines or motors.

The database may also store a record of any fault determined by the system from the image data.

The material loss may be averaged over the run time of the motor or the engine and the material loss per unit time is determined.

The value for material loss per unit time may be used to determine a safe lifetime of the component.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**FIG. 1** presents a cross section of a gas turbine engine;
**FIG. 2a** presents an image of a new nozzle guide vane for a gas turbine engine, and FIG. 2b presents an image of a nozzle guide vane that has been used within a gas turbine engine;
**FIG. 3** presents a schematic of the imaging system for the component;
**FIG. 4** presents an alternative workflow chart of the analysis system;
**FIG. 5** presents an alternative example of workflow process;
**FIG. 6** presents a graph of the image of material loss against the number of components scanned;
**FIG. 7** presents a flow chart of operation of determining the safe operating lifespan of a component within an engine;
**FIG. 8** presents a schematic of operation of a machine leaning or artificial intelligence system;

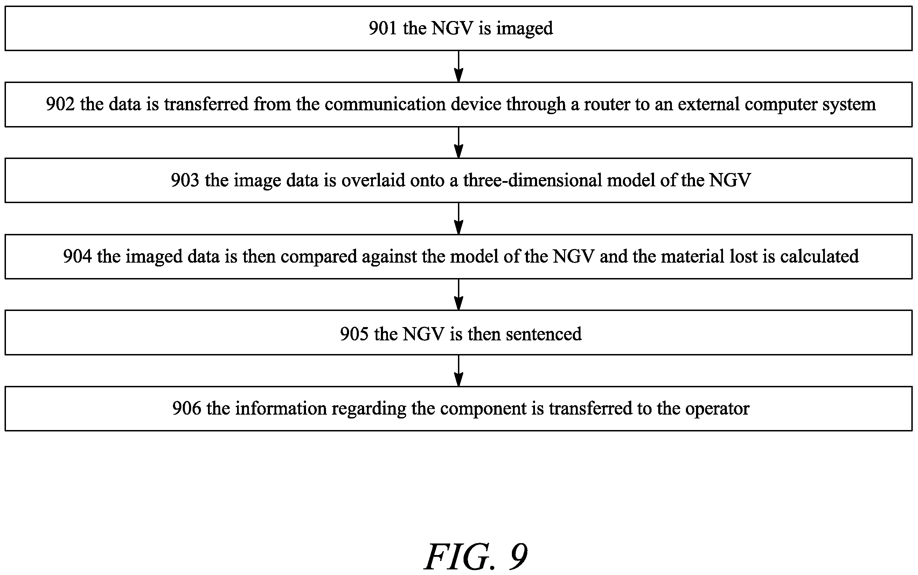

**FIG. 9** presents a flow chart of operation of sentencing a nozzle guide vane according to the present disclosure.

### DETAILED DESCRIPTION

Aspects and embodiments of the present disclosure will now be discussed with reference to the accompanying FIGS.. Further aspects and embodiments will be apparent to those skilled in the art.

The following sets forth specific details, such as particular embodiments or examples for purposes of explanation and not limitation. It will be appreciated by one skilled in the art that other examples may be employed apart from these specific details. In some instances, detailed descriptions of well-known methods, circuits, and devices are omitted for the sake of clarity and conciseness. The person skilled in the art will appreciate that aspects described may be implemented in a number of different ways. For example, this may include the use of one or more nodes using hardware circuitry (e.g., analog and/or discrete logic gates interconnected to perform a specialized function, ASICs, PLAs, etc.) and/or using software programs and data in conjunction with one or more digital microprocessors or general-purpose computers.

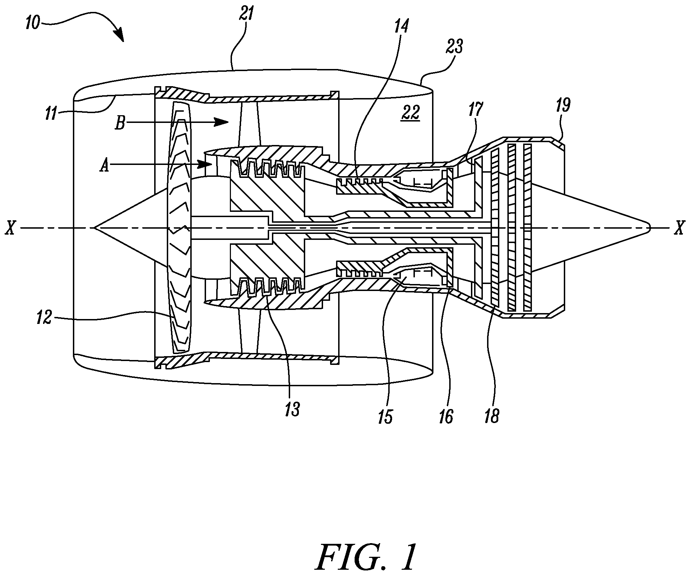

With reference to **FIG. 1****,** a ducted fan gas turbine engine incorporating the invention is generally indicated at 10 and has a principal and rotational axis X-X. The engine comprises, in axial flow series, an air intake 11, a variable pitch propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

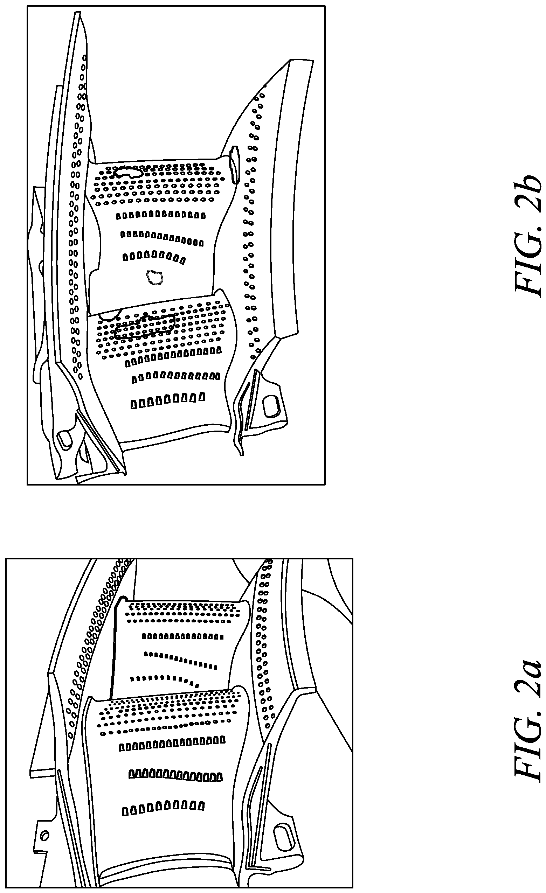

A turbine component such as a nozzle guide vane (NGV) or rotor blade may comprise a metallic substrate covered by a thermal barrier coating. The turbine component may be hollow, with cooling holes passing through the substrate and thermal barrier coating. The nozzle guide vane of **FIG. 2a** is an example of such a component.

FIG. 2a presents an image of a newly manufactured nozzle guide vane (NGV). It is shown that the leading edge and the trailing edge of the NGV are clean and free from any degradation and/or damage. All of the cooling holes are present and unblocked. The condition of such a component is therefore a benchmark against which any degradation or damage can be measured. Once the NGV is put into use within a gas turbine engine the NGV will degrade. The degradation is the result of interaction with debris and the atmosphere.

In such a component, degradation may include: -
- Loss of a portion of the thermal barrier coating (spallation).
- Loss of a portion of the substrate material exposed by the loss of the thermal barrier coating.
- Alteration of the flow area of at least one cooling hole. Alteration of the flow area may take the form of an increase in flow area due to erosion of material (for example, substrate material) around the hole, or may take the form of a reduction in flow area due to at least a partial blockage of the cooling hole due to debris in cooling air provided through the cooling hole.
- Holing of the component.

It will be appreciated that initially, degradation may start with one form of degradation before progressing to another. For example, loss of thermal barrier coating may occur before loss of the underlying substrate; blockage or partial blockage of a cooling hole may occur before thermal barrier coating loss etc.

In the case of rotor blades, for example, turbine rotor blades, degradation may also result from interaction with the engine casing; this results in damage to the surface and may result in material loss. The greater the damage or the material loss the greater the fall off in performance of the component, and consequently, in the engine performance. Ultimately, the damage may result in a component failure. Understanding damage and degradation with respect to normal wear and operation in different conditions is important for both safety, design and scheduling maintenance. The location specific conditional aspect may mean that the loss of material may be greater, for example, if the engine is operated in sandy conditions, then the sand particles within the air can have a greater abrasive effect on the components.

**FIG. 2b** presents a NGV that has been in use over a number of engine run cycles. In this case damage can be seen in the leading edge where there is thermal damage around the cooling holes. In some cases, the cooling holes have been blocked or their size reduced due to the build-up of debris. Although this is presented in terms of components, particularly nozzle guide vanes, in a gas turbine engine, the methods and the computer programs presented can be used to monitor the wear and degradation of any component in an engineering system.

In order to assess the condition and quality or condition of the component imaging using a camera is required. This may require the component to be removed from the engine, such a process can be done during repair or at a fixed maintenance interval. The component can be removed and the information regarding it stored as metadata. For example, the metadata may include the engine number, the section of the engine, the particular component (e.g., which blade is being inspected). Furthermore, the metadata may also include information from the engine controller, such as engine use hours, engine use profiles, geographic tracking, fuel use. The removed component can be imaged.

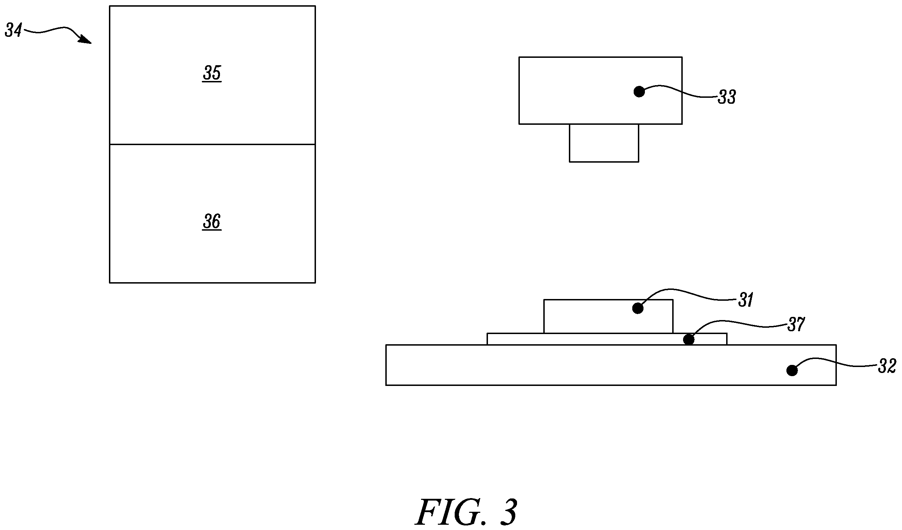

**FIG. 3** presents a pictorial diagram of the imaging setup for the system. The component 31 to be imaged is placed on a surface 32. A camera 33 is used to capture an image of the component. The data from the image is captured on the sensor and processed using the camera processor, before being transferred to the memory of the camera, where the image is saved. Some meta data will be recorded by the camera, such as time of image and the camera settings that were used to record the image. The saved image is transferred to a computer device 34, unless the camera is part of a computing device, in which the image will be stored straight into the memory of the computer, and the processor may be associated with the computer rather than specific for the camera. The computer system has a visual display unit 35 to allow the operator view the image data. The computer system also has a user input device 36; this can be used by the user to add further metadata about the component being imaged. The metadata may be added manually or may be selected form a series of drop-down options stored in the memory of the computer. The computer system having a graphic processing unit, a memory and a CPU. The graphic processing unit may also have its own local memory. The transfer of the data from the camera to the computer may be done through the use of a cable, or may be performed wirelessly; this may be done using any well-known wireless protocol.

The imaging of the component can be done using any suitable digital camera. The digital camera may be part of a standalone camera system or one from a mobile communication device, such as a mobile phone or tablet. If the imaging is done from the same position every time, the determination of material lost may be done by a comparison of pixel counts. However, if this is not done then preferably, the component is placed on a flat surface at a fixed orientation prior to imaging. The component can be placed onto an optical mask 37 before imaging. The mask allows for an accurate edge to be determined. It can also be used as a size reference. and for a reference of size to be included into the image. The reference to size may be an optical marker having a finite size placed on the mask in a position in which the blade is not present. This size optical marker may also be in one or two axis. Size information may also be gathered using features on the component. As discussed, the image data may be uploaded to a system before the meta data is added to the image data. In the case of a mobile communication device having a camera the metadata may be added to it on the system or it may be uploaded to a computer system where the meta data may be added to the image data.

Once the image data is saved in the computer memory and the metadata added the image data may then be analysed. The analysis determines the dimensions of the desired area of the imaged component, in order to calculate material loss by comparing the data against a new component. This can be done by using the optical marker on the mask, if present, or using other aspects of the component to derive an accurate scale for the component to be sized. The comparison of the data may produce a determination of the material loss or other dimensional changes. The level of material loss may be determined for the overall component, or for a specific area of the component.

The values can be compared against those of required dimensions. This data may be compared against the minimum acceptable value for the particular area of the component. It may be against values from the engine manual that may inform the system of the condition or of any known fault. In such a case, the known fault systems for an image are loaded into the analysis system for the component. The system may compare all of the known values and extracts the total material loss. Using either the value for the entire component or for a specific location for material loss the component can be sentenced. In the sentencing it can be determined that the component cannot be used and needs to be scrapped, needs to be repaired or monitored, or is fine for use. The data can then be passed onto the operator so, that they can carry out the task and either repair or maintain the system, so they can install the components back into the system at the end of the repair or overhaul process.

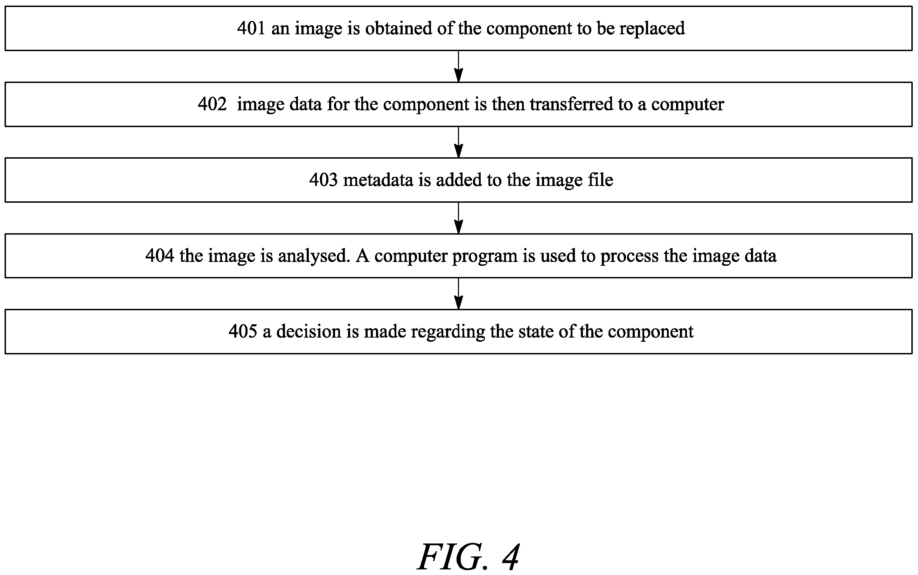

**FIG. 4** presents an example workflow chart of the analysis system. Firstly, the component is removed from the engine. In step 401 an image is obtained of the component to be replaced. The component can be imaged in any suitable way as discussed above. The component may be placed on a translucent mask on a flat surface prior to imaging. A physical mask may be printed on transparent sheets and may have any suitable markings added to it. Alternatively, the mask may be marked out on a glass sheet. Alternatively, a digital mask can be used in the camera software. In the case of a digital mask the mask is translucent image overlay on the imaging device. This is akin to a QR code reader, which provides a grid of box to help the user align the camera with the QR code. The digital mask can be seen through the screen or electronic viewfinder of the camera and provide lines or features, such as corner or edge line markers, which allow the operator taking the photograph of the component to align the component with the mask, so that the relative position and angle of the camera relative to the component have little variation. The digital masks for the components can be pre-loaded into the memory of the camera and selected for the component that is being imaged. With either a physical or digital mask for each same type of component that is imaged the mask is the same, however, for different types of components the mask will need to be changed; this ensures that the mask is compatible with the component. Alternatively, a mask having multiple markings for different types of components can be used. The presence of the mask allows for consistently positioned images to be taken; these images having visual datum for future reference. Furthermore, the masks and the visual datum are able to provide the basis (i.e., a training set) for the development of image recognition technologies. To ensure the correct locations are being inspected, the mask can be configured to highlight the areas of interest, for example, using a different colour, or a label. The reason the use of a translucent mask is desirable is that it allows for the system to accurately detect the edge of the component. In step 402 the image data file for the component is then transferred to a computer. In step 403 metadata is added to the image data file. In step 404 the image is analysed. A computer program is used to process the image data. The program enables the image data file to be opened and inspected along with the metadata. The program may have further functionality as discussed below. The program may be a web-based program. In the program the image data may be overlayed with a three-dimensional model of the component. The image of the component can be overlaid onto the three-dimensional model using any suitable known method. The use of the mask allows for accurate determination of the edge of the component; this allows it to be accurately overlaid onto the three-dimensional model. Furthermore, the mask may have features printed on it that allow for the relative angular position to be determined, thus increasing the accuracy of the fit to the three-dimensional model. Additionally or alternatively, the operator may be used to align the image with the model to determine the best fit. Additionally or alternatively, the system may use known features on the component to accurately align the image with the model. Allowing for the best fit means that the comparison data is most accurate; this means that the determination of the material loss and any potential fault is accurate. If used, it also increases the accuracy of any artificial intelligence (AI) or machine learning (ML) systems used to determine properties and sentence components. Examples of suitable AI systems may include the use of convolutional neural networks. Combining the image with a three-dimensional model allows for accurate determination in three-dimensional space of the change between the component and the reference image. The program can compare the image against reference shape for a new blade/ideal component and record any dimensional changes. Any determination of the change in size of the component due to material loss may be for the overall component or just for a selected portion of the component. AI or ML systems may also be used to estimate the material loss on the component or identify any visible faults. This is based upon the training set data that is input into the system and teaching the system to recognise material loss and damage/faults on the blade. Such systems can be trained using comparison images wherein the training images are labelled with the amount of material loss determined by an operator. The AI or ML system can be trained to recognise damage to the system as well i.e., identify cracks, chips or blocked holes. Again this recognition is bed upon training the system with labelled images of components having faults in them. They may also be ranked as to the severity of the fault. The system can be trained to look at the difference between the edge of the component and a feature on the mask, or may be compared against other image data. Alternatively, the image may 2D or 3D may be converted into a geometrical map with co-ordinate data; this data can be compared by the system against the values for a new/ideal component to determine the change in size of the component as a total or at certain areas. Using this the system may be able to sentence the component. In step 405 a decision is made regarding the state of the component.

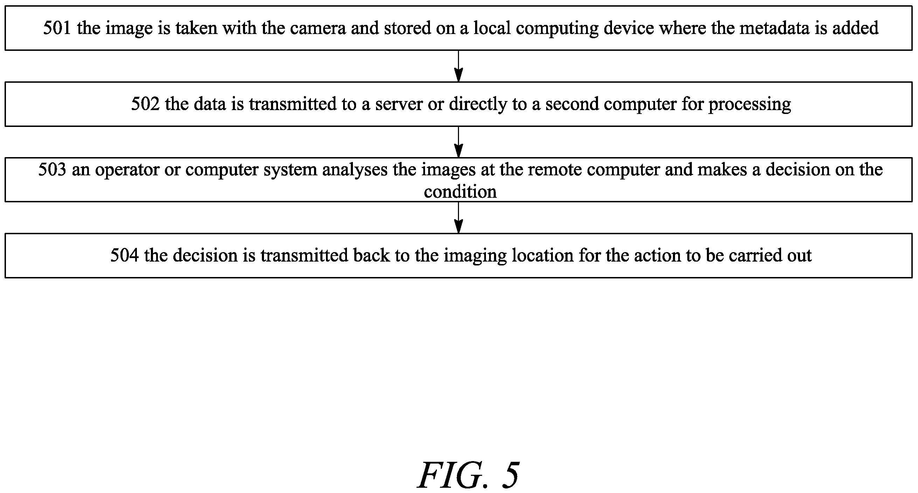

It may be desirable for the information to be processed in a location separate to that in which the component is located. Such a situation may occur if the component is located in international service area, whilst the manufacturer is in a separate country. In such cases the image data may be first loaded onto a local computer or tablet or phone and the metadata added before being transferred via a router to an external inspection computer. In this case the data can be analysed and the results sent back to the technician working on the engine so that they are informed of the sentencing decision. The computer system used for analysis is as discussed above. In this case the meta data may be added on the computer associated with the imaging device prior to transmission. A schematic example of this process is shown in **FIG. 5****.** In step 501 the image is taken with the camera and stored on a local computing device where the metadata is added. In step 502 the data is transmitted to a server or directly to a second computer for processing. In step 503 an operator or computer system analyses the images at the remote computer and makes a decision on the condition. In step 504 the decision is transmitted back to the imaging location for the action to be carried out.

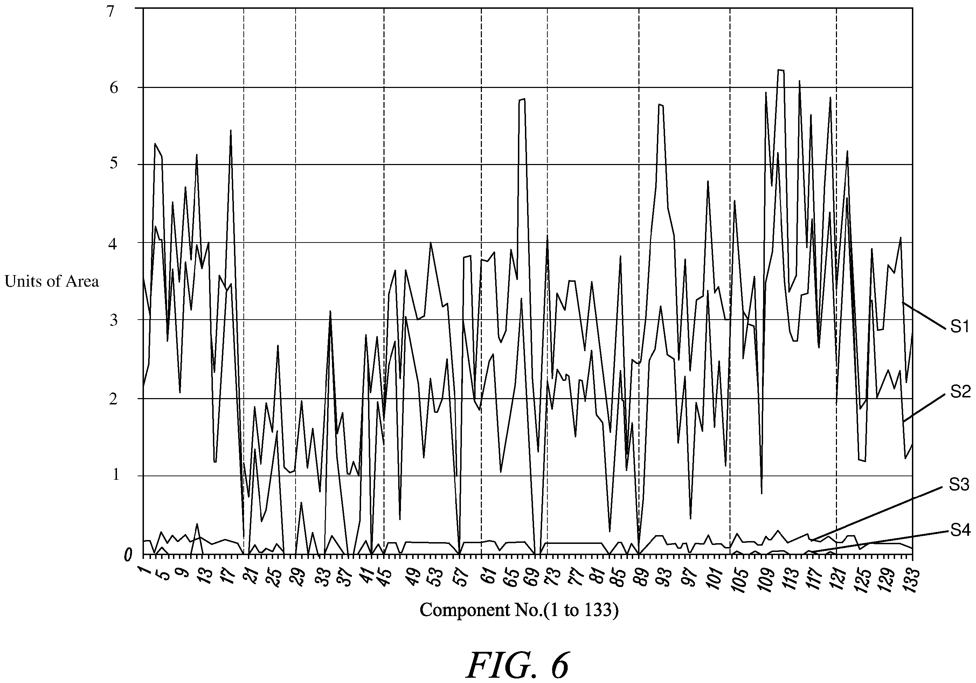

**FIG. 6** presents a graph of the image of material loss (i.e., material wear) against the number of components scanned; this is divided by vertical lines into different engines on which the components were imaged. In the example of FIG. 6, different numbers of components were scanned for different engines, but it will be appreciated that this is not necessarily the case.

The FIG. categorises material degradation into different series, S1, S2, S3 and S4, in which:
a. S1 represents loss of a portion of thermal barrier coating.
b. S2 represents loss of a portion of substrate material.
c. S3 represents alteration of a flow area of at least one cooling hole through the substrate and thermal barrier coating.
d. S4 represents holing of the component.

Across the graph it can be seen that the different engines have different amounts and categories (S1, S2, S3, S4) of material loss on the component analysed. For example, engines two and three present less area lost than is seen on the other engines. Also, it can be seen that different components within the same engine have different erosion rates. In nearly all cases the graph shows that material is lost from all of the components, as would be expected.

In some cases the material loss (degradation) is greater than it is in others.

In some cases the proportion of different categories of material loss (wear) is different (i.e, the relative mounts of S1, S2, S3, S4 wear may be different).

It can be seen that if the erosion rates were averaged then there are cases in which a lot of material is lost and the component needs to be replaced and others in which the wear is less than average; this means that in some cases that the replacement of parts at the inspection interval is not needed. However, in other cases the component does need to be replaced and as such the maintenance decision was correct. With the information on erosion rates learned more can be learned about the engine operation and safer maintenance and servicing solutions. Additionally, it can also benefit new engine design, as it can highlight areas that may need to have extra material to account for loss or to allow the components to be designed such that high abrasion regions are easier to repair.

It has been found that by studying the wear, and optionally, the categories (S1, S2, S3, S4) of wear in the engines against the running time varies depending upon the geographical location of the engine operator, material loss is worse in engines operating in highly abrasive regions to those that are in the least abrasive regions. Consequently, from this it can be readily identified that in all cases there is material loss on the component, but that the rate is highly dependent upon the operating conditions of the engine. The operating conditions (including engine use hours, engine use profiles, geographic tracking of the engine) form part of the metadata associated with a component. In particular, in areas having more drier sandier or more desert conditions cause greater wear and as a result greater material loss on the blades. This is because a greater number of particles are ingested by the engine, which then cause wear as they contact with components within the engine. Using this information, it is possible to adjust the required maintenance and repair operations and set more accurate time values for the component. This increases the safety of the operation by ensuring that in cases with high erosion rates an accurate determination of on wing time can be achieved.

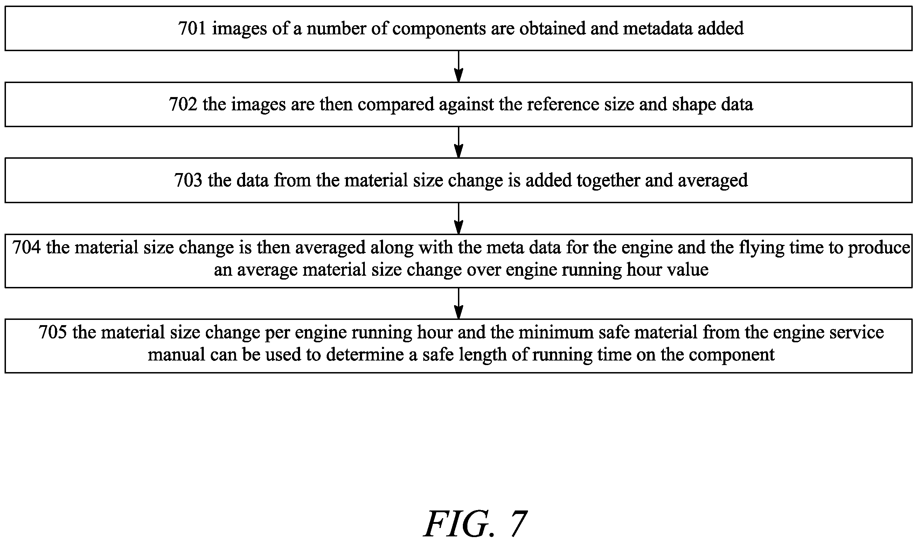

**FIG. 7** presents a flow chart of operation of determining the safe operating lifespan or maintenance schedule of a component within an engine. In step 701 images of a number of components are obtained. The components can be imaged as discussed above. The use of a mask allows the edges and scales and sizes of components to be accurately determined. The number of components can be between 1 and 10,000. Preferably, this is between 100 and 5000; this allows for an accurate average of material loss to be determined. In step 702 the images are then compared against the reference size and shape data. The comparison is performed using the computer system as discussed above. This comparison allows for a determination in the change in size of the component over its use within the engine. In step 703 the data from the material size change for the component is averaged. In step 704 the material size change is then averaged along with the meta data for the engine and the running time to produce an average material size change over engine running hour value. This produces an accurate average wear value average across a range of engines in different components. The data can be broken down to individual components of the same type, so that different wear rates for different components can be differentiated. In step 705 the material size change per engine running hour and the maximum safe material loss from the engine service manual can be used to determine a safe length of running time on the component. This can be used to inform the decision on maintenance. Additionally, determination of the category of the deterioration (TBC loss, substrate loss, flow area alteration, holing) may modify the maintenance decision. For example, a component with a low overall level of damage, but with that damage concentrated in a localised area (for example, localised holing) may be sentenced differently to a component having similar overall degradation more evenly spread around the component. A safety buffer may be added to this, so that in the case of conditions leading to the greater material loss can be accommodated. This may be a 5-50% time buffer. Preferably, this may be between 10-25% of the calculated time. This will cover against differences in zones and also allow for a margin of error in case of adverse conditions. Consequently, this allows for a more accurate maintenance and component lifetime to be determined than an estimate.

In the averaging process, the averaging may be across the entire area of operations. Alternatively, it may be limited to a specific geographic zone of operation. If the data material loss is for the entire global operations, then an average lifetime span can be used for setting the maintenance spans. Alternatively, if the data is for a specific area of operation is calculated, an accurate estimate of the likely safe operational lifetime can be determined for that area can be determined. This information can be fed back into the servicing and maintenance schedule, so that only components that need to be replaced are removed from the system, thus increasing safety, and reducing the amount of wastage and cost that occurs during maintenance and overhaul.

If an AI or machine learning system is used, it may also be able to detect other likely faults as well as in estimating material loss. A skilled operator looking at the damage and determining material loss may also be able to spot faults or issues with the components. Using an AI or machine learning system can be achieved by training the system to recognise likely faults as well as determining material size change. Consequently, such systems are beneficial as they identify critical faults when the material loss is minimal. Such a system would further increase the safe operation of the engine. This is because the image processing and the data obtained can also be used to make more informed decisions regarding safety and repairs/replacement of components. The data that is extracted from the images along with meta data can be used to identify trends and determine a likelihood of faults occurring.

Artificial intelligence or machine learning systems can be used with the images. This can be done with the two-dimensional images or once they have been mapped onto their three-dimensional plots. The masks may be marked or coloured to assist in the training of the system. In the training of the system 100-100,000 plus images are inputted into the system along with information regarding the condition (e.g., needs removing or replacing, or can be maintained). As the skilled person will appreciate the system may be trained using a number of means. One way is to compare images and determine material loss, for example, the information on the initial state of the component in the uploaded image may be provided by a skilled operator who has independently verified the blade to check the condition. Another is to identify the size difference between the blade and features on the mask. For the features on the mask may be used in the training data. A further option is to convert the image into co-ordinate data and then the system is trained to compare against the new/ideal component value. By inputting the images of the components into the system the material loss can be determined by determining the system determining the dimensions of the component by using known references and using this to extrapolate as co-ordinates or dimensions which can be compared against the new ideal component values.

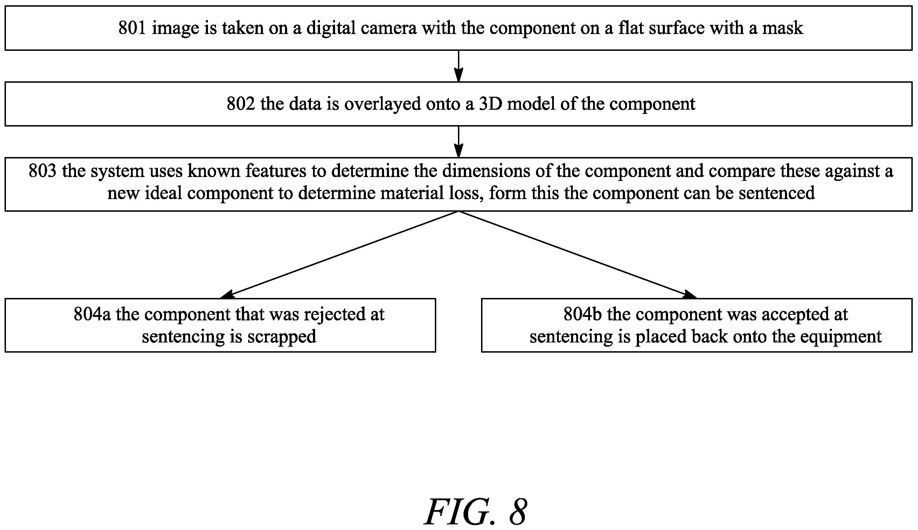

**FIG. 8** presents a schematic example of operation of a machine leaning or artificial intelligence system. In step 801 image is taken on a digital camera with the component on a flat surface with a mask. In step 802 the data is overlayed onto a 3D model of the component. In step 803 the system uses features to determine the dimensions of the component and compare these against a new ideal component to determine material loss, form this the component can be sentenced. In step 804a the component that was rejected at sentencing is scrapped. In step 804b the component was accepted at sentencing is placed back onto the equipment. The image data can then have further information read into it. Furthermore, the AI or machine learning program can also include an estimate of damage, calculation of loss of material, or other parameters. The estimate of damage can be combined with other data regarding the component such as use time, or operation conditions; this can be obtained from data logging within the engine. This combined data can be used to spot potential future issues, or to make recommendations.

Another example of the above systems is disclosed in **FIG**. **9****.** In this example, the engine is a gas turbine engine and the component is a nozzle guide vane (NGV). During maintenance and overhaul the nozzle guide vanes are stripped after a set service interval and set to be replaced. In step 901 the NGV is imaged. This is done using a tablet or mobile phone. Prior to imaging the NGV is aligned with either a physical or digital mask as discussed above. Metadata is combined with the image; this includes at least one or more of the following: particular engine, particular component, engine operator, engine flying hours, cycles since new, part serial number, overhaul location, date, time, inspector details, part location in engine. In step 902 the data is transferred from the communication device through a router to an external computer system. The data can then be opened using processing software stored on the external machine or as part of a web-based program system. In step 903 the image data is overlaid onto a three-dimensional model of the NGV. This presents the imaged component as a scaled three-dimensional image. In step 904 the imaged data is then compared against the model of the NGV and the material lost is calculated. If the images are for the component are always from a fixed scale and size this determination of changes can be done by pixel counting the images. Alternatively, the system may determine co-ordinates or scales based on known features or marks on the component and/or mask. This allows for the total material lost be calculated for the component. In addition the material lost in a particular zone may be calculated, for example leading edge loss, trailing edge loss. The material loss can be determined form the geometric co-ordinates of the model against the image modelled data to determine the material loss. In step 905 the NGV is then sentenced. If the material loss is greater than is prescribed in the engine manual for any of the zones calculated then the component is to be scrapped, or sent for repair. If it is less than the material loss prescribed against the engine manual, then the component can be reinstalled. The three-dimensional imaged data may also be loaded into an AI or machine learning system. This system can be used to confirm the material loss and/or may be used to determine the presence of any faults. In this the modelled three-dimensional data is then fed into system and which compares the image against a training dataset of images with known faults and the system identifies the presence similarities to determine the presence of a fault. The values calculated for material loss can then be used to determine if there is too much material loss for safe operation of the component. The more images used in training dataset the system the greater the accuracy of the assessment will be. The images that are loaded may be manually checked by an operator using optical or mechanical measurement system, so that confidence can be determined on the presence of missing material or a fault. In step 906 the information regarding the component is transferred to the operator. The operator can then replace the component or re-attach it to the gas turbine engine. In step 907 the resultant data is stored for the system along with the metadata, this data is then added to a database of results for the component. This database can be used to determine a number of characteristics of operation of the component, such as average amount of material loss, number of components having damage, localised determination of material loss. The operator or manufacturer can use this data to make more informed maintenance decisions or can be used in future design to increase the lifespan of the component.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method for determining the wear to a component (31), the method comprising:
aligning the component (31) with a physical or digital mask (37), wherein the physical or digital mask is transparent, with areas marked for an edge of the component;
taking an image of the component using a camera (33);
transferring the image of the component into the memory of a computer and adding metadata related to the component (31);
comparing the captured image of the component (31) against a perfect component, and
determining the amount of material loss between the perfect component and the imaged component (31) by determining the differences between the captured image data with that of a perfect component.

2. The method according to any preceding claim, wherein the imaged component (31) is scaled to a co-ordinate database that matches a model of the perfect component, and the determining of the material loss is performed by subtracting the co-ordinates of the imaged component (31) from those of the perfect modelled component.

3. The method according to any preceding claim, wherein the amount of material loss is compared against the material limits of the component (31) and the component (31) is sentenced based on this comparison.

4. The method according to any one of claims 2 or 3, wherein the component (31) is scaled using either a scale marked on the mask, or by determining the size from a feature of known size on the component (31).

5. The method according to any preceding claim, wherein the image is mapped onto a three-dimensional model of the component, before the comparison of size is performed.

6. The method according to any preceding claim, wherein the metadata added to the image is one or more of the following: engine, component number, engine run time, operator, area of operation.

7. The method according to claim 6, wherein the material loss is divided by the engine run time to determine the material loss per unit time of the engine running.

8. The method according to claim 7, wherein the material loss over unit time is output to a manufacturer or operator to identify replacement time limit for the component.

9. The method according to any preceding claim wherein the component is a component of turbine of a gas turbine engine and the wear to the component is categorised into at least one of:
a. loss of a portion of thermal barrier coating;
b. loss of a portion of substrate material;
c. alteration of a flow area of at least one cooling hole through the substrate and thermal barrier coating; and
d. holing of the component;

10. The method according to claim 9, wherein a safe length of future running time on the component is predicted based upon the determined categorisation of wear of the component and the metadata.

11. The method according to claim 10 wherein the component is sentenced to either be scrapped, refurbished or refitted to a gas turbine engine based upon the predicted safe length of future running time.

12. A computer operated program for determining the material loss of a component, by performing the method steps of claims 1-11.

13. The computer program according to claim 12, wherein the computer program is installed on the device having the camera of claim 1.

14. The computer program according to claim 12, wherein the captured image data is transferred to a second computer, having the program of claim 12.
